# EUROPÄISCHE PATENTANMELDUNG

(11) **EP 1 040 882 A2**
(43) Veröffentlichungstag der Anmeldung: **04.10.2000**
(21) Anmeldenummer: 00105697.7
(22) Anmeldetag: 17.03.2000
(51) Int. Cl.: B21D 53/04

(54) **Herstellungsverfahren zur Herstellung von Wärmetauscherelementen**

(30) Priorität: 19.03.1999 DE 19912527
(71) Anmelder: STULZ GmbH Klimatechnik, 22457 Hamburg (DE)
(72) Erfinder: Mertingk, Wolfgang, 22393 Hamburg (DE); Glagowski, Heinz, 24558 Henstedt-Ulzburg (DE)
(74) Vertreter: Mahler, Peter, Dipl.-Phys.

(57) **Zusammenfassung**

Die Erfindung betrifft ein Herstellungsverfahren zur Herstellung von Wärmetauscherelementen, insbesondere für Kühl- oder Heizdecken, wobei die Wärmetauscherelemente eine plane Seite zur Wärmeübertragung und Kanäle für ein Kühl- oder Heizmedium aufweisen. Gemäß alternativer Verfahrensmöglichkeiten kann ein Mehrschichtblech aus zwei äußeren, planen Schichten und einer Mittelschicht hergestellt werden, wobei das Material der Mittelschicht einen niedrigeren Schmelzpunkt als das Material der äußeren Schichten aufweist. Das Mehrschichtblech wird dann in einer Presse erhitzt, deren einer Stempel ein Negativbild der Kanäle für das Kühl- oder Heizmedium aufweist, und zwar auf eine Temperatur oberhalb der Schmelztemperatur der Mittelschicht und unterhalb der Schmelztemperatur der Außenschichten. Durch die Gasinjektion in die Mittelschicht im Bereich eines Kühlkanals mit hohem Druck wird dann das durch das Negativbild des Stempels definierte Kanalbild in einer der Außenschichten erzeugt. Altemativ kann auch ein Mehrschichtblech mit einem Trennmittel im Bereich der späteren Kanäle hergestellt werden. Durch Erhitzen des Mehrschichtblechs werden die Außenschichten und die Mittelschicht in den Bereichen ohne Trennmittel miteinander verbunden und in den mit Trennmittel versehenen Bereichen anschließend durch Gasinjektion das Kanalbild aufgeformt. Gemäß einer weiteren Alternative kann auf die Mittelschicht verzichtet werden, wenn die Bleche durch Erwärmen, Walzen und Plattieren miteinander verbunden werden. Durch vorheriges Aufbringen einer Trennschicht wird wieder die Möglichkeit erreicht, durch Gasinjektion Kanäle aufzuformen.

## Beschreibung

Die Erfindung betrifft Herstellungsverfahren zur Herstellung von Wärmetauscherelementen, insbesondere für Kühl- oder Heizdecken.

Um Wärmelasten in Räumen abzuführen, werden häufig abgehängte Kühldecken eingesetzt, in die einzelne Kühlelemente integriert sind. Die Integration erfolgt üblicherweise durch Einkleben oder Einklemmen. Solche Kühldecken müssen vielerlei Ansprüchen gerecht werden. Zum einen müssen die im Raum anfallenden Wärmelasten, wie sie beispielsweise durch Beleuchtung, EDV-Geräte und den Aufenthalt von Personen anfallen, abgeführt werden. Zum anderen müssen die Decken akustischen Aufgaben gerecht werden. Innerhalb der Deckenflächen besteht deshalb nicht die Möglichkeit, unbegrenzt zusammenhängende Kühlflächen anzuordnen.

In der Praxis wird dies Problem in der Regel dadurch gelöst, daß vorgefertigte Standardelemente, häufig aus Aluminium-Strangpreßprofilen mit Aufnahmen für Rohrleitungen versehen sind, die eine Kühlflüssigkeit, in der Regel Wasser, führen. Die Rohrleitungen werden auf die Rückseite geklemmt oder geklebt.

Da die Werkzeugkosten für Werkzeuge zur Herstellung von Strangpreßprofilen sehr hoch sind, werden lediglich Strangpreßprofile für Standardeinsätze hergestellt. Diese Standardelemente müssen dann zurechtgeschnitten oder aneinandergefügt werden, um individuelle Lösungen zu erreichen.

Die Wärmeübertragung zwischen den in Halteeinrichtungen auf dem Strangpreßprofil aufgebrachten Kühlmittelrohren und den Strangpreßprofilen ist häufig problematisch. Normalerweise wird Kupferrohr verwendet, das eine gute Wärmeübertragung und ausreichende Biegbarkeit zur Herstellung von Rohrschleifen aufweist, jedoch relativ teuer ist. Kunststoffrohre liefern nicht die erforderliche Wärmeübertragung und lassen sich nur schwer formschlüssig in entsprechende Ausnehmungen in den Strangpreßprofilen einpassen.

Da Strangpreßprofile keine zweidimensionale Profilierung auf ihrer Oberfläche zulassen, ist eine mäanderartige Verlegung von Kühlleitungen nur eingeschränkt möglich. Die volle Auflagefläche eines Kühlelements auf dem entsprechenden Deckenelement ist nicht für die Wärmeübertragung nutzbar.

Es ist Aufgabe der vorliegenden Erfindung, Herstellungsverfahren für Kühlelemente vorzustellen, die eine individuelle Herstellung von Kühlelementen unter dem Gesichtspunkt der optimalen strömungsdynamischen Anlage der Kühlkanäle erlauben.

Erfindungsgemäß wird ein Herstellungsverfahren zur Herstellung von Wärmetauscherelementen, insbesondere für Kühl- oder Heizdecken, vorgeschlagen, wobei die Wärmetauscherelemente eine plane Seite zur Wärmeübertragung und Kanäle für ein Kühl- oder Heizmedium aufweisen, das aus den folgenden Schritten besteht:
a) Herstellen eines Mehrschichtblechs aus zwei äußeren, planen Schichten und einer Mittelschicht, wobei das Material der Mittelschicht einen niedrigeren Schmelzpunkt als das Material der äußeren Schichten aufweist;
b) Erhitzen des Mehrschichtblechs in einer Presse, deren einer Stempel ein Negativbild der Kanäle für das Kühl- oder Heizmedium aufweist, auf eine Temperatur oberhalb der Schmelztemperatur der Mittelschicht und unterhalb der Schmelztemperatur der Außenschichten;
c) Gasinjektion in die Mittelschicht im Bereich eines Kanals mit hohem Druck zur Formung des durch das Negativbild des Stempels definierten Kanalbildes in einer der Außenschichten.

Als weitere Lösung der erfindungsgemäßen Aufgabe wird ein Herstellungsverfahren zur Herstellung von Wärmetauscherelementen, insbesondere für Kühl- oder Heizvorrichtungen, vorgeschlagen, wobei die Wärmetauscherelemente eine plane Seite zur Wärmeübertragung und Kanäle für ein Kühl- oder Heizmedium aufweisen, das aus folgenden Schritten besteht:
a) Herstellen eines Mehrschichtblechs aus zwei äußeren, planen Schichten und einer Mittelschicht, wobei zumindest im Bereich der Kanäle ein Trennmittel zwischen wenigstens einer Außenschicht und der Mittelschicht aufgebracht wird;
b) Erhitzen des Mehrschichtblechs, so daß die Außenschichten und die Mittelschicht in den Bereichen ohne Trennmittel miteinander verbunden werden;
c) Gasinjektion in die Mittelschicht im Bereich eines Kanals mit hohem Druck zur Formung des durch die Trennschicht definierten Kanalbildes in einer der Außenschichten.

Als dritte erfindungsgemäße Lösung der Aufgabe wird ein Herstellungsverfahren zur Herstellung von Wärmetauscherelementen, insbesondere von Kühl- oder Heizdecken, vorgeschlagen, wobei die Wärmetauscherelemente eine plane Seite zur Wärmeübertragung und Kanäle für ein Kühl- oder Heizmedium aufweisen, bestehend aus den Schritten
a) Herstellen eines Mehrschichtblechs aus zwei planen Blechen, wobei zumindest auf der Innenseite eines Blechs zumindest im Bereich der Kanäle ein Trennmittel aufgebracht ist;
b) Erwärmen, Walzen und Plattieren der Bleche zur Verbindung der Bleche in den Bereichen ohne Trennmittel;
c) Gasinjektion zwischen die Bleche im Bereich eines Kanals mit hohem Druck zur Formung des durch das Trennmittel definierten Kanalbildes in einer der Außenschichten.

Nach dem letztgenannten Verfahren werden die Blechplatten zunächst gesäubert und gebürstet. Mit Hilfe einer Siebdruckschablone wird ein Trennmittel auf wenigstens eine Innenseite eines Bleches in den Bereichen aufgetragen, in denen später die Kanäle gebildet werden sollen. Das Trennmittel verhindert bei der anschließenden Walzplattierung lokal die ansonsten wasserdichte Verbindung der Bleche.

Vorzugsweise werden die verbundenen Bleche bei den beiden zuletzt genannten Verfahren in eine Presse eingelegt, deren einer Stempel ein Negativbild der Kanäle aufweist, wobei eine Korrelation zwischen den nicht verbundenen Bereichen und dem Kanalbild hergestellt wird. Dadurch wird sichergestellt, daß die Kanäle nur auf einer Seite aufgeformt werden. Die gegenüberliegende Seite bleibt plan.

Alle erfindungsgemäßen Verfahren eignen sich hervorragend zum Herstellen von Wärmetauscherelementen mit Kanälen für ein Kühl- oder Heizmedium, die eine plane Seite aufweisen.

Die erfindungsgemäß hergestellten Wärmetauscherelemente können beispielsweise auf ein abgehängtes Deckenelement aufgelegt werden oder selbst als abgehängtes Deckenelement dienen. Die plane Seite dient dabei als Sichtfläche oder ermöglicht eine große Auflagefläche auf dem bestehenden Deckenelement.

Dient das Wärmetauscherelement selbst als Deckenelement, kann die Sichtseite optisch ansprechend gestaltet werden, etwa durch Bürsten oder Polieren. Damit lassen sich Probleme mit der Wärmeübertragung zwischen abgehängtem Deckenelement und eingelegtem Wärmetauscherelement vermeiden.

Vorzugsweise werden Außenbleche aus Aluminium verwendet, während für die Mittelschicht vorzugsweise ZnAl₄ Verwendung findet.

Zur Verbindung der Außenschichten und der Mittelschicht wird das Mehrschichtblech vorzugsweise auf eine Temperatur von ca. 450°C erhitzt.

Damit sich die Außenbleche des Mehrschichtblechs bei der Anwendung des zweit- und des drittgenannten Verfahrens nicht vollflächig miteinander verbinden, wird als Trennmittel vorzugsweise Graphit oder TiO₂ verwendet. Das Trennmittel kann im Siebdruckverfahren aufgebracht werden.

Um Wärmetauscherelemente zum Auflegen auf beispielsweise eine abgehängte Decke mit möglichst guten Wärmeübertragungseigenschaften zwischen Wärmetauscherelement und Deckenelement herzustellen, wird vorzugsweise ein dickeres Blech für die plane Seite und ein dünneres Blech für die nach Ausführung des Verfahrens profilierte Seite verwendet.

Es kann die untere Schicht eine Stärke von 0,8 mm aufweisen. Für die obere Schicht kann ein Blech einer Stärke von 0,8 mm verwendet werden. Dadurch diese Materialstärke wird gewährleistet, daß die einzelnen Elemente sich etwa beim Transport oder bei der Montage nicht verbiegen und hinterher isolierende Luftpolster zwischen dem Wärmetauscherelement und der Decke entstehen.

Vorteilhaft kann das später die plane Seite bildende Blech stärker sein als das zur Aufformung der Kanäle verwendete Blech. Bei entsprechenden Dickenverhältnissen der Bleche zueinander kann es bei den zweit- und drittgenannten Verfahren überflüssig sein, während der Aufformung der Kanäle eine Presse einzusetzen.

Während das Mehrschichtblech gemäß dem erstgenannten Verfahren in der Presse erhitzt wird, so daß die Mittelschicht eine Verbindung zwischen den Außenschichten herbeiführt, und die Aufweitung der Kanäle gleichzeitig erzeugt wird, werden diese Verfahrensschritte gemäß dem zweit- und drittgenannten Verfahren nacheinander durchgeführt. Die Schichten des Mehrschichtblechs werden zunächst miteinander verbunden. Dabei wird die später gewünschte Führung der Kanäle durch das vorher aufgebrachte Trennmittel berücksichtigt. Die Aufweitung der Kanäle erfolgt dann ohne zusätzliche Erhitzung des Blechs. Natürlich kann auch gemäß dem erstgenannten Verfahren ein bereits verbundenes Mehrschichtblech in die Presse eingelegt und nochmals erhitzt werden.

Bei der Gasinjektion wird vorteilhaft Stickstoff verwendet. Der Druck, der zur Verformung eines 0.8 mm starken Aluminiumblechs erforderlich ist, beträgt etwa 80 - 90 bar. Erfolgt die Verformung kalt, sind bis zu 120 bar erforderlich.

Beide erfindungsgemäßen Verfahren erlauben gegenüber der bisherigen Fertigung erheblich mehr Freiheit in der Anordnung der Kanäle für das Heiz- oder Kühlmedium. Es können breitere Kanäle gewählt werden, die eine gute Wärmeübertragung ermöglichen. Eine enge Führung der Kanäle ist ohne Probleme möglich. Es entfallen alle Probleme mangelnder Wärmeübertragung zwischen separatem Rohr für das Kühl-oder Heizmedium und dem Wärmeübertragungselement.

Die erfindungsgemäß hergestellten Wärmetauscherelemente werden vorzugsweise als Kühlelemente in wassergekühlten Kühldecken verwendet. Es versteht sich aber von selbst, daß die Erfindung keineswegs auf wassergekühlte Kühldecken beschränkt ist, sondern auch auf Heizvorrichtungen sowie andere Kühl- oder Wärmemedien als Wasser anwendbar ist.

Erfindungsgemäß hergestellte Wärmeübertragungselemente werden vorzugsweise im Rahmen von Kühlanlagen verwendet, die über einen geschlossenen Kühlmittelkreislauf verfügen und mit Wasser gefüllt sind, das ein korrosionsschützendes Produkt aufweist. Als Füll- und Ergänzungswasser kann Umkehrosmosewasser verwendet werden. Zusätzlich kann zur Vermeidung von Korrosionsproblemen ein organisches Korrosionsschutzmittel mit anodisch und kathodisch wirkenden Inhibitoren verwendet werden.

Die Erfindung wird im folgenden anhand der beigefügen Abbildungen näher erläutert:
- **Fig.1**: zeigt ein nach dem Verfahren gemäß nach Anspruch 3 hergestelltes Wärmetauscherelement in Draufsicht;
- **Fig. 2**: zeigt einen Schnitt durch einen Kanal in der Richtung A-A;
- **Fig. 3**: zeigt einen Anschlußstutzen in der Richtung F-F;
- **Fig. 4**: zeigt die wannenfömige Abkantung eines des Wärmetauscherelements einschließlich der Befestigungsvorrichtung;
- **Fig. 5**: zeigt die dem Raum zugewandte Unterseite des Wärmetauscherelements;
- **Fig. 6**: zeigt eine perspektivische Ansicht des Wärmetauscherelements.

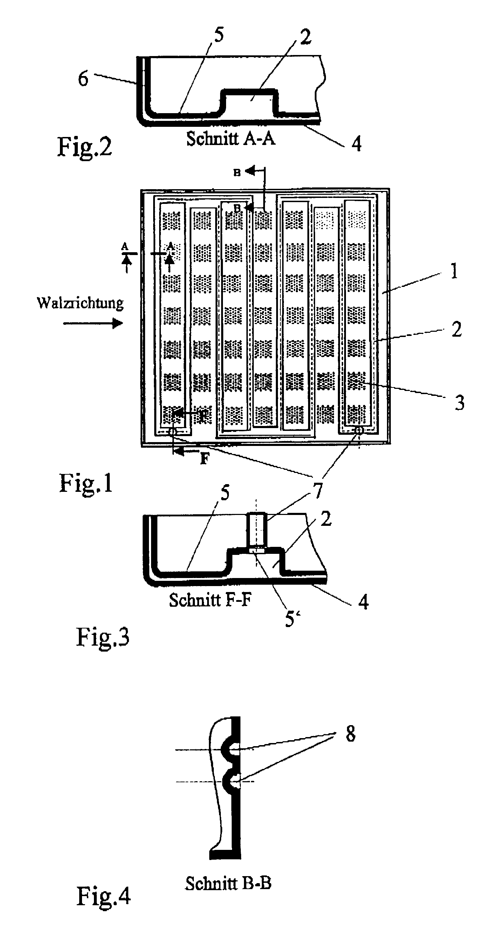

In **Fig. 1** ist ein Wärmetauscherelement **1** dargestellt, das nach dem Verfahren nach Patentanspruch 3 hergestellt ist. Es besteht aus zwei Aluminiumblechen **4** und **5**, die durch Walzplattierung miteinander verbunden werden. Vor dem Walzplattieren werden die Bleche gesäubert und gebürstet. Mit Hilfe einer Siebdruckschablone wird auf die Innenseite eines Bleches ein Trennmittel in einem Muster aufgebracht, das dem späteren Verlauf der Kanäle **2** entspricht. Die Kanäle sind in einer sich in Walzrichtung wiederholenden Richtung angeordnet.

Zur Schalldämpfung sind zwischen den Kanälen **2** Lochfelder **3** symmetrisch angeordnet.

**Fig. 2** zeigt einen Kanal **2** im Schnitt, der durch das Grundblech **4** und das Abdeckblech **5** gebildet wird. Durch die seitlichen Abkantungen **6** des Wärmetauscherelements wird eine wannenförmige Grundform erreicht.

In **Fig. 3** ist eine Anschlußstelle an den Kanal für das Kühl- oder Heizmedium dargestellt. Der Anschlußstutzen **7** wird zentrisch zum Loch **5'** im Abdeckblech **5** angelötet bzw. angeschweißt.

**Fig. 4** zeigt einen Ausschnitt der Abkantung **6** mit geprägten Fixierungspunkten **8** für eine Befestigung der Deckenpaneele in einem Klemmprofil.

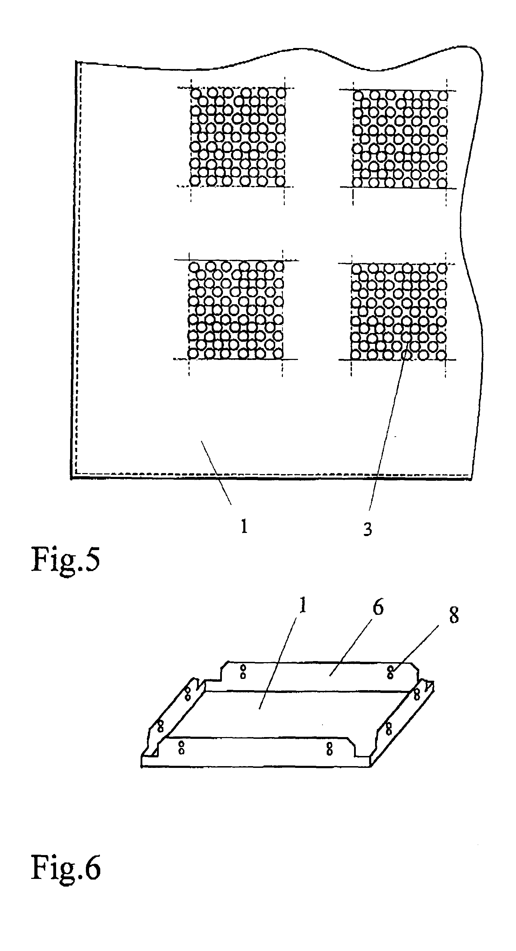

**Fig. 5** zeigt das Wärmetauscherelement **1** von der Unterseite und läßt die symmetrisch angeordneten Lochfelder **3** erkennen, welche aus akustischen Gründen vorgesehen sind.

In **Fig. 6** wird ein erfindungsgemäßes Wärmetauscherelement **1** als wannenförmig ausgebildete Deckenpaneele **6** erreicht. Die auf allen Seiten vorgesehenen Fixierungspunkte **8** dienen zur Befestigung der Deckenpaneele an der Deckenunterkonstruktion.

## Patentansprüche

1. Herstellungsverfahren zur Herstellung von Wärmetauscherelementen, insbesondere für Kühl- oder Heizdecken, wobei die Wärmetauscherelemente eine plane Seite zur Wärmeübertragung und Kanäle für ein Kühl- oder Heizmedium aufweisen, bestehend aus den Schritten
a) Herstellen eines Mehrschichtblechs aus zwei äußeren, planen Schichten und einer Mittelschicht, wobei das Material der Mittelschicht einen niedrigeren Schmelzpunkt als das Material der äußeren Schichten aufweist;
b) Erhitzen des Mehrschichtblechs in einer Presse, deren einer Stempel ein Negativbild der Kanäle für das Kühl- oder Heizmedium aufweist, auf eine Temperatur oberhalb der Schmelztemperatur der Mittelschicht und unterhalb der Schmelztemperatur der Außenschichten;
c) Gasinjektion in die Mittelschicht im Bereich eines Kühlkanals mit hohem Druck zur Formung des durch das Negativbild des Stempels definierten Kanalbildes in einer der Außenschichten.

2. Herstellungsverfahren zur Herstellung von Wärmetauscherelementen, insbesondere von Kühl- oder Heizdecken, wobei die Wärmetauscherelemente eine plane Seite zur Wärmeübertragung und Kanäle für ein Kühl- oder Heizmedium aufweisen, bestehend aus den Schritten
a) Herstellen eines Mehrschichtblechs aus zwei äußeren, planen Schichten und einer Mittelschicht, wobei zumindest im Bereich der Kanäle ein Trennmittel zwischen wenigstens einer Außenschicht und der Mittelschicht aufgebracht wird;
b) Erhitzen des Mehrschichtblechs, so daß die Außenschichten und die Mittelschicht in den Bereichen ohne Trennmittel miteinander verbunden werden;
c) Gasinjektion in die Mittelschicht im Bereich eines Kanals mit hohem Druck zur Formung des durch die Trennschicht definerten Kanalbildes in einer der Außenschichten.

3. Herstellungsverfahren zur Herstellung von Wärmetauscherelementen, insbesondere von Kühl- oder Heizdecken, wobei die Wärmetauscherelemente eine plane Seite zur Wärmeübertragung und Kanäle für ein Kühl- oder Heizmedium aufweisen, bestehend aus den Schritten
a) Herstellen eines Mehrschichtblechs aus zwei planen Blechen, wobei zumindest auf der Innenseite eines Blechs zumindest im Bereich der Kanäle ein Trennmittel aufgebracht ist;
b) Erwärmen, Walzen und Plattieren der Bleche zur Verbindung der Bleche in den Bereichen ohne Trennmittel;
c) Gasinjektion zwischen die Bleche im Bereich eines Kanals mit hohem Druck zur Formung des durch die Trennschicht definierten Kanalbildes in einer der Außenschichten.

4. Verfahren nach Anspruch 2 oder 3, **dadurch gekennzeichnet,** daß das Mehrschichtblech vor der Gasinjektion in eine Presse eingelegt wird, deren einer Stempel ein Negativbild der Kanäle aufweist, und wobei eine Korrelation zwischen den nicht verbundenen Bereichen und dem Kanalbild hergestellt wird

5. Herstellungsverfahren nach einem der Ansprüche 1 bis 4, **dadurch gekennzeichnet,** daß die Außenschichten des Mehrschichtblechs aus Aluminium bestehen.

6. Herstellungsverfahren nach einem der Ansprüche 1, 2, 4 oder 5, **dadurch gekennzeichnet,** daß die Mittelschicht des Mehrschichtblechs aus ZnAl₄ besteht.

7. Herstellungsverfahren nach einem der Ansprüche 2 bis 6, **dadurch gekennzeichnet,** daß als Trennmittel Graphit oder TiO₂ verwendet wird.

8. Herstellungsverfahren nach einem der Ansprüche 2 bis 7, **dadurch gekennzeichnet,** daß das Trennmittel im Siebdruckverfahren aufgebracht wird.

9. Herstellungsverfahren nach einem der Ansprüche 1 bis 8, **dadurch gekennzeichnet,** daß die plane Außenschicht des Mehrschichtblechs stärker ist als die Außenschicht zur Formung der Kühlkanäle.

10. Herstellungsverfahren nach einem der Ansprüche 1 bis 9 **dadurch gekennzeichnet,** daß das Mehrschichtblech auf ca. 450° erwärmt wird.

11. Herstellungsverfahren nach einem der Ansprüche 1 bis 10, **dadurch gekennzeichnet,** daß bei der Gasinjektion Stickstoff unter einem Druck von 80 bis 120 bar, vorzugsweise 90 oder 120 bar, verwendet wird.

12. Herstellungsverfahren nach einem der Ansprüche 1 bis 11, **dadurch gekennzeichnet,** daß die Bleche mit Ausstanzungen versehen werden.
